# EUROPÄISCHE PATENTSCHRIFT

(11) **EP 0 496 268 B1**
(45) Veröffentlichungstag und Bekanntmachung des Hinweises auf die Patenterteilung: **03.04.1996**
(21) Anmeldenummer: 92100595.5
(22) Anmeldetag: 15.01.1992
(51) Int. Cl.: H04N 7/087

(54) **Empfangsgerät zum Empfangen von Teletextsignalen**
Teletextsignal receiver
Récepteur de signaux de télétexte

(30) Priorität: 21.01.1991 DE 4101624
(43) Veröffentlichungstag der Anmeldung: 29.07.1992
(73) Patentinhaber: SIEMENS AKTIENGESELLSCHAFT, D-80333 München (DE)
(72) Erfinder: Höck, Günter, Dipl.-Ing., W-8122 Penzberg (DE); Bartholomä, Thomas, Dipl.-Ing., W-8000 München 80 (DE); Sellar, David, W-8000 München 80 (DE)

(56) Entgegenhaltungen:
- EP-A- 0 393 555
- DE-A- 3 623 925
- GB-A- 2 231 470
- US-A- 4 908 706
- FUNKSCHAU Bd. 62, Nr. 7, 23. März 1990, München, DE, SS. 51-53; M. GRETHLEIN: 'Schlagzeilen aus dem Chip'
- PROCEEDINGS OF THE INTERNATIONAL CONFERENCE ON CONSUMER ELECTRONICS 6. Juni 1989, New York, IEEE, US, SS. 164-165; C.R.W. LYNE: 'A SINGLE CHIP TELETEXTDECODER INCLUDING DATA SLICER', Abschnitt 'THE DATA ACQUISITION CIRCUITS'

## Beschreibung

Empfangsgerät zum Empfang von Teletextsignalen mit einer Einrichtung zum Speichern einer Vielzahl von Teletextseiten in einem Teletextseitenspeicher mit Teletextseitenanforderungsanordnungen mit Komparatoren zum mindestens teilweise bitweisen Vergleichen von Teletextadreßdaten mit vorgebbaren Daten und mit einem Teletextseitenspeicher zum Speichern der Vielzahl von Teletextseiten.

Immer mehr Sendeanstalten gehen dazu über, neben Fernsehsendungen auch Zusatzinformationen für den Betrachter in Form von Teletextseiten zu übertragen. Als Empfangsgeräte zum Empfang von solchen Teletextsignalen dienen Fernsehgeräte und Videorekorder.

Beim World-System-Teletext, kurz Teletext oder auch Videotext genannt, können die Teletextdaten für die auf dem Bildschirm darzustellenden Teletextseiten in den Fernsehzeilen 6 bis 22 und 318 bis 353 der Vertikalaustastlücke des Videosignals übertragen werden, sofern von einem 625-Zeilen-Fernsehsystem ausgegangen wird.

Die fortlaufende Übertragung der Teletextdaten erfolgt in einem speziell verschlüsselten Format mit einer Bitrate von 6,9375 MHz und 360 Bits pro Teletextzeile. Jedes gesendete Teletextzeichen benötigt ein Byte mit 7 Datenbits und einen Paritätsbit. Eine Teletextseite besteht in der ersten Aufbaustufe (Level 1) des World-System-Teletext aus 24 Teletextzeilen, die jeweils zu Beginn Teletextadreßdaten mit anschließenden Teletextdaten aufweisen.

Die erste Teletextzeile einer Teletextseite weist als Teletextadreßdaten eine Magazinnummer mit anschließender Zeilennummer, Seitennummer, Seitenunternummer und Kontrollbits auf, an die sich 32 Bytes Teletextdaten anschließen. Die Teletextzeilen 1 bis 23 dagegen verfügen als Teletextadressen nur über die Magazin- und die Zeilennummer. Die Seitennummern können zwischen 100 und 899 liegen, wobei die erste Ziffer die beim Teletextsystem vorhandenen acht Magazine kennzeichnet. Wenn eine fortlaufende Information mehr als eine Teletextseite benötigt, können Unterseiten übermittelt werden. Diese Unterseiten werden ebenfalls in der ersten Teletextzeile der Teletextseite gekennzeichnet.

Die von den Sendeanstalten gesendeten Teletextseiten werden zyklisch übertragen, d. h. nachdem alle in der Redaktion der Sendeanstalt enthaltenen Seiten gesendet wurden, ist ein Zyklus beendet. Im nächsten Zyklus werden dieselben Seiten erneut übertragen. Damit die Zykluszeit und folglich die Wartezeit auf der Empfangsseite für den Benutzer des Teletextdienstes noch zumutbar wird, ist die Anzahl der in einem Zyklus enthaltenen Teletextseiten begrenzt. Die Zykluszeit beträgt etwa 20 sec. Die Seitenzahl pro Zyklus ergibt sich damit aus der Zykluszeit und der Anzahl der benutzten Teletextdatenzeilen je vertikaler Austastlücke.

Um die Wartezeit für die von den Betrachtern voraussichtlich am häufigsten angeforderten Teletextseiten - wie z. B. die Informationsseite 100 - zu verkürzen, werden solche Teletextseiten mehrfach in einem Zyklus von der Sendeanstalt gesendet. Dadurch wird allerdings die gesamte Zykluszeit vergrößert und somit das Warten auf andere Teletextseiten abermals verlängert. Im ungünstigsten Fall vergeht nämlich vom Beginn einer Teletextseitenanforderung durch den Benutzer bis zur Aquisition der angeforderten Teletextdaten die Zeitdauer für einen Zyklus.

Diese Wartezeit wird vom Benutzer des Teletextdienstes als störend empfunden. Möglichkeiten, diese Wartezeiten zu verkürzen, sind in Funkschau, Heft 13, 1989, auf den Seiten 55 bis 58, dort insbesondere auf Seite 56, rechte Spalte sowie in der EP 0 118 950 A1 abgesprochen. Eine Möglichkeit, die Wartezeit zu verkürzen, besteht darin, das Empfangsgerät mit genügend Speicherplatz für eine Vielzahl oder sämtliche Teletextseiten auszustatten, wobei etwa ein kByte, Speicherkapazität pro Teletextseite vorgesehen werden muß. Eine vom Benutzer angeforderte Teletextseite wird dann nicht nur in der Aquisition des Teletextempfangsgerätes angefordert, sondern im Teletextseitenspeicher, in dem die Teletextseiten eines jeden Zyklus abgelegt worden sind. Die Wartezeit auf die angeforderte Teletextseite kann damit auf praktisch Null reduziert werden, nachdem der erste empfangene Zyklus beendet ist.

Eine andere Möglichkeit, die Wartezeit auf Teletextseiten zu verkürzen, geht von der Tatsache aus, daß viele Teletextseiten thematisch miteinander verbunden sind. Gibt man diesen Teletextseiten eine Kontextinformation mit, kann das Empfangsgerät die korrelierten Seiten in einem relativ kleinen Speicher gleich abrufbereit speichern. Teletextsysteme mit solchen Kontextinformationen sind unter der Bezeichnung "Top" und "Flof" bekannt und in dem genannten Artikel der Funkschau eingehender beschrieben.

In der US-Patentschrift US-A-4 908 706 ist eine Teletextempfangseinrichtung beschriebenen, die mehrere Teletextseitenanforderungseinrichtungen enthält. Die angeforderten Teletextseiten werden in einem den Teletextseitenanforderungseinrichtungen nachgeschalteten Teletextseitenspeicher abgelegt. Der Teletextseitenspeicher ist in eine Vielzahl von Abschnitten aufgeteilt. Zur Zugriffssteuerung auf den Seitenspeicher ist eine Registerbank vorgesehen, in der die Adressen der Speicherabschnitte enthalten sind.

Der Erfindung liegt die Aufgabe zugrunde, ein Empfangsgerät zum Empfangen von Teletextsignalen mit einer Einrichtung zum Empfangen bzw. Speichern sämtlicher oder einer Vielzahl von Teletextseiten anzugeben, die von einer relativ langsam arbeitenden Steuereinrichtung steuerbar ist.

Diese Aufgabe wird dadurch gelöst, daß die Teletextseitenanforderungsanordnungen parallel geschaltet sind, und daß eine Steuereinrichtung zum Bereitstellen der vorgebbaren Daten vorgesehen ist, die derart ausgeführt ist, daß jede Teletextseitenanforderungsanordnung eindeutig mindestens teilweise die Teletextseiten eines Magazins anfordert, diese angeforderten Teletextseiten des Magazins zyklisch seitenweise in die der entsprechenden Teletextseitenanforderungsanordnung nachgeschalteten Seitenzwischenspeicher einschreibt und aus einem Seitenzwischenspeicher, der gerade nicht mit Teletextseiten beschrieben wird, eine gespeicherte Teletextseite ausliest und nach Ermitteln deren Seitennummer unter eine für diese Seitennummer dieses Magazins vorgesehene Speicheradresse im Teletextseitenspeicher überträgt und dort speichert.

Weiterbildungen der Erfindung sind Gegenstand der abhängigen Patentansprüche.

Die Erfindung wird im folgenden anhand eines Fernsehgerätes zum Empfangen von Teletextsignalen näher erläutert. Es zeigen:
- FIG 1: ein Blockschaltbild eines Fernsehgerätes zum Empfangen von Teletextsignalen mit einer Einrichtung zum Speichern sämtlicher oder einer Vielzahl von Teletextseiten in einem Teletextseitenspeicher und
- FIG 2: ein Blockschaltbild der Einrichtung zum Speichern der Teletextseiten von FIG 1.

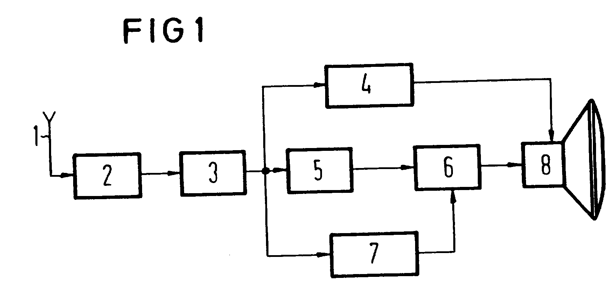

In FIG 1 ist das Beispiel für ein Empfangsgerät zum Empfang von Teletextsignalen mit einer Einrichtung 7 zum Speichern einer Vielzahl von Teletextseiten in Form eines Blockschaltbildes eines Fernsehgerätes dargestellt, das einen eingangsseitigen Tuner 2 zeigt, der die HF-Eingangssignale beispielsweise von einer Antenne 1 empfängt. Dem Tuner 2 ist ein Video-ZF-Verstärker 3 nachgeschaltet, dessen Ausgangssignal sowohl einer Horizontal- und Vertikalablenkstufe 4 als auch einen Farbdekoder 5 mit nachgeschalteter Videoendstufe 6 zugeführt ist. Eine Bildröhre 8 wird von der Horizontal- und Vertikalablenkstufe 4 und der Videoendstufe 6 angesteuert.

Zum Empfang der Teletextsignale, die in den Vertikalaustastlücken des Videosignales übertragen werden, ist der Ausgang der Video-ZF-Stufe 3 mit einer Einrichtung 7 verbunden, einem sog. Teletextdekoder, der die Teletextsignale im Videosignal erkennt und den Datenstrom dieser Teletextsignale vom Rest des Videosignales (Farbburst, Synchronsignale etc.) abtrennt. Darüberhinaus wird in dieser Einrichtung ein Datentakt erzeugt, der zum Datentakt des Teletextsignales synchronisiert ist. Anschließend erfolgt in der Einrichtung 7 die eigentliche Datenverarbeitung der Teletextsignale. Die bei der Datenverarbeitung des Teletextsignales ermittelten Teletextdaten werden in einer Speichereinrichtung abgelegt und dessen Inhalt über einen Zeichengenerator der Videoendstufe 6 des Fernsehgerätes zugeführt, womit eine Teletextseite auf der Fernsehbildröhre 8 des Fernsehgerätes einblendbar ist.

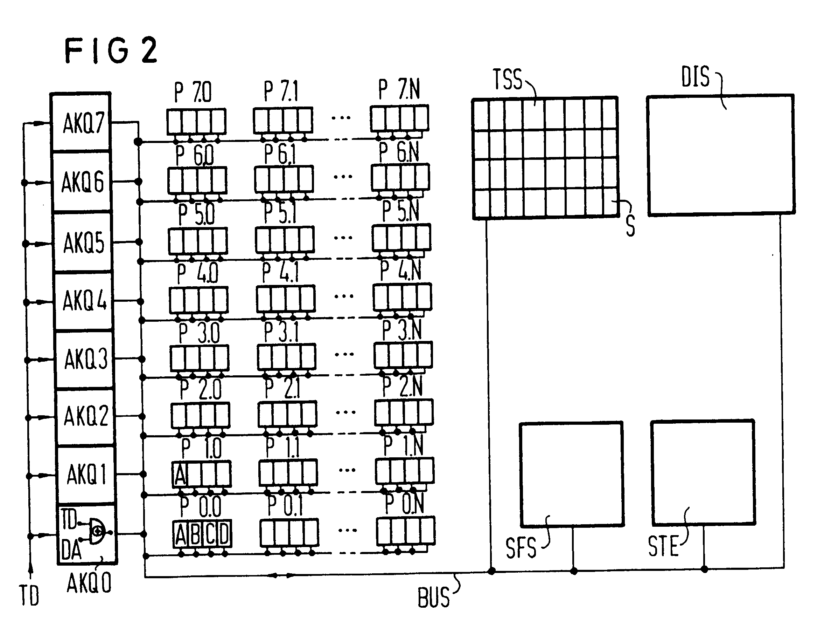

In FIG 2 ist ein Blockschaltbild der Einrichtung 7 von FIG 1 zum Speichern sämtlicher oder einer Vielzahl von Teletextseiten in einem Teletextseitenspeicher TSS dargestellt. Es wird dabei davon ausgegangen, daß die Teletextdaten TD bereits über einen Data-Slicer aus dem Videosignal am Ausgang der Bild-ZF-Stufe 3 abgetrennt sind. Zusätzlich soll der Datentakt bereits synchronisiert sein. Ein dafür möglicher integrierter Schaltkreis ist beispielsweise der SDA 5231 von Siemens.

Erfindungsgemäß gelangen die Teletextdaten TD an parallel geschaltete Teletextseitenanforderungsanordnungen AKQ 0...AKQ 7, die Komparatoren zum mindestens teilweise bitweisen Vergleich der Teletextdaten TD mit vorgebbaren Daten DA vorsehen. Im Ausführungsbeispiel von FIG 2 sind 8 parallel geschaltete Teletextseitenanforderungsanordnungen AKQ 0...AKQ 7 vorgesehen. Jeder dieser Teletextseitenanforderungsanordnungen AKQ 0 ...AKQ 7 sind mindestens zwei, hier N, Seitenzwischenspeicher P0.0...P.N zum Speichern jeweils einer Teletextseite nachgeschaltet. Diese Seitenzwischenspeicher P0.0...P7.N sind mit dem Teletextseitenspeicher TSS zum Speichern der Vielzahl von Teletextseiten verbunden. Der Teletextseitenspeicher TSS kann so gestaltet sein, daß sämtliche Teletextseiten gespeichert werden können. Da die Teletextseiten von seiten der Sendeanstalten in acht Magazinen zu je 99 Seiten angeordnet sind, reicht eine Speicherkapazität von 800 kByte für den Teletextseitenspeicher TSS aus, wenn für jede Teletextseite zur Abspeicherung ein kByte reserviert wird. Der Teletextseitenspeicher TSS ist vorzugsweise in Segmente S zu je ein kByte Speicherraum eingeteilt.

Weiterhin ist in FIG 2 eine Steuereinrichtung STE zum Bereitstellen der obengenannten vorgebbaren Daten DA vorgesehen. Diese Daten werden derart von der Steuereinrichtung STE bereitgestellt, daß jede Teletextseitenanforderungsanordnung AKQ 0... AKQ 7 eineindeutig die Teletextseiten eines Magazins anfordert. Dazu lädt die Steuereinheit STE die vorgebbaren Daten DA in jede Teletextseitenanforderungsanordnung AKQ 0...AKQ 7. Diese vorgebbaren Daten sind so eingestellt, daß je Teletextseitenanforderungsanordnung AKQ 0...AKQ 7 nur die Magazinnummern der Teletextdaten spezifiziert werden. Jede Teletextseitenanforderungsanordnung AKQ 0...AKQ 7 wird somit ein eindeutig den Teletextseiten eines Magazines zugeordnet. In FIG 2 werden dazu beispielsweise in der Teletextseitenanforderungsanordnung AKQ 0 alle Teletextseiten aus Magazin 8 angefordert, in der Teletextseitenanforderungsanordnung AKQ 1 alle Teletextseiten aus Magazin 2 usw. und in der Teletextseitenanforderungsanordnung AKQ 7 sämtliche Teletextseiten aus Magazin 7.

Die so angeforderten Teletextseiten eines Magazins werden anschließend durch die Steuereinrichtung STE gesteuert, zyklisch seitenweise in die der entsprechenden Teletextseitenanforderungsanordnung AKQ 0...AKQ 7 nachgeschalteten Seitenzwischenspeichern P0.0...P7.N eingeschrieben. Dazu lädt die Steuereinrichtung eine Adresse der ersten Teletextseitenanforderungsanordnung AKQ 0 in ein Zieladreßregister der zugehörigen Teletextseitenanforderungsanordnung AKQ 0...AKQ 7. Die Anzahl N der Seitenzwischenspeicher P0.0...P7.N ist stufenweise einstellbar. Diese Seitenzwischenspeicher P0.0...P7.N sind in ihrer Größe in 1, 2 oder 4 zusammenhängende 1-kByte-Segmente A, B, C, D eingeteilt. Diese Segmentierung kann hinsichtlich der Teletextseitenanforderungsanordnung AKQ 0...AKQ 7 separat erfolgen. Werden nur Teletextseiten ohne sogenannte Pseudoreihen vorausgesetzt, benötigen die Seitenzwischenspeicher P0.0...P7.N jeweils nur ein einziges 1-kByte-Segment A.

Aquiriert eine Teletextseitenanforderungsanordnung AKQ 0 ... AKQ 7 eine erste Kopfzeile einer Teletextreihe des zugeordneten Magazins, wird sie alle folgenden zu dieser Teletextseite gehörenden Reihen in den Seitenzwischenspeicher Px.0 schreiben bis ein diese Teletextseite kennzeichnendes Endekriterium erkannt wird. Somit wird beispielsweise die erste Teletextseite des ersten Magazins von der Teletextseitenanforderungsanordnung AKQ 1 angefordert und in das Segment A des Seitenzwischenspeichers P1.0 eingeschrieben. Unmittelbar danach wird die Adresse für den Seitenzwischenspeicher im Zieladreßregister der Teletextseitenanforderungsanordnung AKQ 1 inkrementiert. Wird nun die nächste Teletextseite in diesem Magazin übertragen, so wird diese von der Teletextseitenanforderungsanordnung AKQ 1 in den nächsten Seitenzwischenspeicher P1.1 eingeschrieben und folglich verhindert, daß die Teletextdaten der vorher empfangenen Teletextseite überschrieben werden. Dieses automatische Inkrementieren der Adresse im Zieladreßregister der Teletextseitenanforderungsanordnung AKQ 1 durch die Steuereinrichtung STE erfolgt entsprechend der gewählten Anzahl von Seitenzwischenspeichern. Nach der Adressierung des letzten Seitenzwischenspeichers, hier des Seitenzwischenspeichers P1.N wird die Adresse in Zieladreßregister der Teletextseitenanforderungsanordnung AKQ 1 wieder auf den ersten Seitenzwischenspeicher P1.0 eingestellt. Für die übrigen den anderen Teletextseitenanforderungsanordnungen AKQ 0, AKQ 2... AKQ 7 nachgeschalteten Seitenzwischenspeichern P0.0... P0.N, P2.0...P7.N gilt entsprechendes.

Während nun eine nächste Teletextseite im Seitenzwischenspeicher P1.1 empfangen wird, bleibt der Steuereinrichtung STE genügend Zeit, um aus dem ersten Seitenzwischenspeicher P1.0, der gerade nicht mit Daten einer Teletextseite beschrieben wird, die Seitennummer der zwischengespeicherten Teletextseite zu ermitteln und diese Teletextseite aus dem Seitenzwischenspeicher P1.0 in den Teletextseitenspeicher TSS zu übertragen. Dabei wird die Zuordnung der Seitennummer zum Speicherplatz im Teletextseitenspeicher TSS von der Steuereinrichtung STE durchgeführt. Der Teletextseitenspeicher TSS wird von der Steuereinrichtung STE so verwaltet, daß die Teletextseiten, insbesondere die mehrfach in einem Zyklus übertragene Teletextseiten, immer unter über derselben Speicheradresse abgelegt werden. Damit kann der Teletextseitenspeicher TSS optimal ausgenutzt werden. Ein wesentlicher Vorteil dabei ist, daß senderseitig auf die wiederholte Übertragung von Teletextseiten pro Zyklus verzichtet werden kann.

Nachdem die Daten einer Teletextseite aus dem Seitenzwischenspeicher, beispielsweise dem Seitenzwischenspeicher P1.0, zum Teletextseitenspeicher TSS übertragen worden sind und dort abgespeichert wurden, ist dieser Seitenzwischenspeicher P1.0 wieder frei, um neu erfaßte Teletextdaten des zugeordneten Magazins, hier des Magazins 1, aufzunehmen.

Dieser Vorgang geschieht für jede Teletextseitenanforderungsanordnung AKQ 0...AKQ 7.

Zur Übertragung der Adressen, Teletextdaten und Steuersignale der Steuereinrichtung STE ist ein Bussystems BUS vorgesehen, über den die notwendigen Signale zwischen den Teletextseitenanforderungsanordnungen AKQ 0...AKQ 7, den Seitenzwischenspeichern P0.0...P7.N, dem Teletextseitenspeicher TSS der Steuereinrichtung STE und einem noch näher zu erläuternden Seitenanforderungsspeicher SFS übertragen werden können.

Mit dem bisher beschriebenen System ist es möglich, sämtliche, in einem Zyklus übertragene Teletextseiten in dem Teletextseitenspeicher TSS zu speichern. Soll nun eine vom Benutzer angeforderte Teletextseite zur Anzeige auf einen Bildschirm gebracht werden, wird diese Teletextseite im Teletextseitenspeicher TSS von der Steuereinrichtung STE gesucht und von dieser über das Bussystem BUS zu einem Displayspeicher DIS transferiert und bei Bedarf über einen nicht dargestellten Zeichengenerator auf dem Bildschirm des Gerätes dargestellt.

In einer Weiterbildung der erfindungsgemäßen Einrichtung ist ein Seitenanforderungsspeicher SFS zum Speichern einer Tabelle von Seitennummern von anzufordernden Teletextseiten vorgesehen. Die Steuereinrichtung STE sieht vor, daß eine Übertragung einer in einem der Seitenzwischenspeicher P0.0...P7.N gespeicherten Teletextseite zum Teletextseitenspeicher TSS nur dann zugelassen wird, wenn die im Seitenzwischenspeicher P0.0...P7.N gespeicherte Teletextseite eine Seitennummer hat, die zu einer in der Tabelle des Seitenanforderungsspeichers SFS enthaltenen Seitennummer identisch ist. Die Anzahl der maximal möglichen Seitennummern in der Tabelle des Seitenanforderungsspeichers SFS darf nicht größer sein als die Anzahl der im Teletextseitenspeicher TSS vorgesehenen Segmente S.

Neben der zuvor erwähnten Möglichkeit, nur die Teletextseiten eines ganz bestimmten Magazins in die der dazugehörenden Teletextseitenanforderungsanordnung AKQ 0...AKQ 7 nachgeschalteten Seitenzwischenspeicher P0.0...P7.N zyklisch seitenweise einzuschreiben, besteht bei entsprechender Ausbildung der Komparatoren die weitere Möglichkeit, nur bestimmte Teletextseiten eines Magazins in diese Seitenzwischenspeicher P0.0...P7. einzuschreiben. Sind die Komparatoren der Teletextseitenanforderungsanordnungen AKQ 0...AKQ 7 mit Komparatoren ausgestattet, die einen bitweisen Vergleich der Magazinnummer, Reihennummer, Seitennummer, Unterseitennummer und sämtlicher Kontrollbits C4 bis C14 der Teletextdaten erlaubt, so können beispielsweise nur bestimmte Seiten eines Magazins in die Seitenzwischenspeicher eingeschrieben werden, z. B. Seiten, die sich geändert haben. Die Komparatoren sind dazu so gestaltet, daß deren Vergleichsergebnis unabhängig von der Bitposition der vorgegebenen Daten wird, wenn diese mit sog. "Don't care-Bits" markiert sind. Jeder Bitposition der vorgegebenen Daten ist ein solches "Don't care-Bit" zugeordnet. Werden beispielsweise sämtliche "Don't care-Bits" in den vorgegebenen Daten gesetzt, so liefert der Komparator ausgang in den Teletextseitenanforderungsanordnungen AKQ 0 ...AKQ 7 immer das Ergebnis, daß die vorgegebenen Daten und die Teletextdaten gleich sind. Um beispielsweise sämtliche Teletextseiten eines Magazins von einer Teletextseitenanforderungsanordnung AKQ 0...AKQ 7 anzufordern, sind demnach die vorgebbaren Daten DA durch die Steuereinrichtung STE so einzustellen, daß die Komparatoren nur die Magazinnummern in den Teletextzeiten vergleichen. Alle anderen Bitpositionen der vorgebbaren Daten werden mit "Don't care-Bits" besetzt. Soll dageben nur eine Untermenge dieser Teletextseiten eines Magazins in den Seitenzwischenspeichern P0.0...P7.N zwischengespeichert und damit zur Übertragung zum Teletextseitenspeicher TSS zur Verfügung gestellt werden, so sind die vorgebbaren Daten DA von der Steuereinrichtung STE an den entsprechenden Bitpositionen mit "Don't care-Bits" zu besetzen. Jede der Teletextseitenanforderungsanordnungen funktioniert damit als eine Art Filter, um nur bestimmte Teletextseiten eines Magazins durchzulassen.

Sollen auch die zuvor erwähnten sog. Pseudoreihen von der Einrichtung aquirierbar sein, werden die Seitenzwischenspeicher P0.0...P7.N in 1, 2 oder 4 mal l-kByte-Segmente A, B, C, D aufgeteilt. Werden die zur Bilddarstellung vorgesehenen Teletextreihen 0 bis 24 von der Einrichtung aquiriert, wird diese in das Segment A eines Seitenzwischenspeichers P0.0...P7.N eingeschrieben.Die Pseudoreihen werden in die restlichen Segmente B, C, D eingeschrieben, wobei die Adreßzuordnung der Steuereinrichtung oder Teletextseitenanforderungsanordnung überlassen bleibt.

## Patentansprüche

1. Empfangsgerät zum Empfangen von Teletextsignalen mit einer Einrichtung zum Speichern einer Vielzahl von Teletextseiten in einem Teletextseitenspeicher (TSS) mit Teletextseitenanforderungsanordnungen (AKQ 0...AKQ 7) mit Komparatoren zum mindestens teilweise bitweisen Vergleichen von Teletextadreßdaten (TD) mit vorgebbaren Daten (DA) und mit einem Teletextseitenspeicher (TSS) zum Speichern der Vielzahl von Teletextseiten,
**dadurch gekennzeichnet**, daß
- die Teletextseitenanforderungsanordnungen (AKQ 0...AKQ 7) parallel geschaltet sind,
- eine Steuereinrichtung (STE) zum Bereitstellen der vorgebbaren Daten (DA) vorgesehen ist, die derart ausgeführt ist, daß jede Teletextseitenanforderungsanordnung (AKQ 0...AKQ 7) eindeutig mindestens teilweise die Teletextseiten eines Magazins anfordert, diese angeforderten Teletextseiten des Magazins zyklisch seitenweise in die der entsprechenden Teletextseitenanforderungsanordnung (AKQ 0...AKQ 7) nachgeschalteten Seitenzwischenspeicher (P0.0...P7.N) einschreibt und aus einem Seitenzwischenspeicher (P0.0...P7.N), der gerade nicht mit Teletextseiten beschrieben wird, eine gespeicherte Teletextseite ausliest und nach Ermitteln von deren Seitennummer unter eine für diese Seitennummer dieses Magazins vorgesehene Speicheradresse im Teletextseitenspeicher (TSS) überträgt und dort speichert.

2. Empfangsgerät nach Anspruch 1,
**dadurch gekennzeichnet**, daß
ein Seitenanforderungsspeicher (SFS) zum Speichern einer Tabelle von Seitennummern von anzufordernden Teletextseiten vorgesehen ist und daß die Steuereinrichtung (STE) eine Ubertragung einer in einem der Seitenzwischenspeicher (P0.0...P7.N) gespeicherten Teletextseite zum Teletextseitenspeicher (TSS) nur dann zuläßt, wenn die im Seitenzwischenspeicher (P0.0...P7.N) gespeicherte Teletextseite mit einer in der Tabelle enthaltenen Seitennummer identisch ist.

3. Empfangsgerät nach Anspruch 1 oder 2,
**dadurch gekennzeichnet**, daß
jede Teletextseitenanforderungsanordnung (AKQ 0...AKQ 7) Zieladressregister aufweist, in denen eine veränderbare Adresse abgelegt ist, durch die ein der Teletextseitenanforderungsanordnung (AKQ 0...AKQ 7) nachgeschalteter Seitenzwischenspeicher (P0.0...P7.N) auswählbar ist.

4. Empfangsgerät nach Anspruch 3,
**dadurch gekennzeichnet**, daß
die veränderbare Adresse von der Steuereinrichtung (STE) zyklisch inkrementierbar ist.

5. Empfangsgerät nach einem der Ansprüche 1 bis 4,
**dadurch gekennzeichnet**, daß
der Teletextseitenspeicher (TSS) in Segmente (S) zum Speichern einer Teletextseite, insbesondere in Segmente (S) von 1 kByte Speicherraum eingeteilt ist.

6. Empfangsgerät nach einem der Ansprüche 1 bis 5,
**dadurch gekennzeichnet**, daß
ein Seitenzwischenspeicher (P0.0...P7.N) mindestens ein Segment (A) zum Speichern einer Teletextseite, insbesondere ein Segment (A) von 1 kByte Speicherraum, aufweist.

7. Empfangsgerät nach einem der Ansprüche 1 bis 6,
**dadurch gekennzeichnet**, daß
ein Seitenzwischenspeicher (P0.0...P7.N) mindestens ein weiteres Segment (B, C, D) zum Speichern von Zusatzinformationen aufweist.

8. Empfangsgerät nach einem der Ansprüche 1 bis 7,
**dadurch gekennzeichnet**, daß
durch die Steuereinrichtung (STE) Bitpositionen der vorgebbaren Daten (DA) mit "don't care"-Bits besetzbar sind und daß die Komparatoren so gestaltet sind, daß ein Vergleichsergebnis unabhängig von den mit den "don't care"-Bits besetzten Bitpositionen ist und dadurch nur vorbestimmte Teletextseiten eines Magazins von der Teletextseitenanforderungsanordnung (AKQ 0... AKQ 7) anforderbar sind.

9. Empfangsgerät nach einem der Ansprüche 1 bis 8,
**dadurch gekennzeichnet**, daß
der Teletextseitenspeicher (TSS) eine Speicherkapazität von mindestens 100 kByte aufweist.

10. Empfangsgerät nach einem der Ansprüche 1 bis 9,
**dadurch gekennzeichnet**, daß
die Steuereinrichtung (STE) ein Überschreiben von der in einem Seitenzwischenspeicher (P0.0...P7.N) gespeicherten Teletextseite mit einer neuen Teletextseite erst zuläßt, nachdem die zuvor gespeicherte Teletextseite zum Teletextseitenspeicher (TSS) übertragen worden ist.

11. Empfangsgerät nach einem der Ansprüche 1 bis 10,
**dadurch gekennzeichnet**, daß
eine von einem Benutzer angeforderte Teletextseite durch die Steuereinrichtung (STE) im Teletextseitenspeicher (TSS) gesucht und über ein Bussystem (BUS) zu einem Displayspeicher (DIS) übertragbar und über einen Zeichengenerator auf einem Bildschirm (8) des Empfangsgerätes darstellbar ist.

12. Empfangsgerät nach einem der Ansprüche 1 bis 11,
**dadurch gekennzeichnet**, daß
die Anzahl der maximal möglichen Seitennummern in der Tabelle des oder eines Seitenanforderungsspeichers (SFS) kleiner gleich der Anzahl der im Teletextseitenspeicher (TSS) vorgesehenen Segmente (S) zur Speicherung der Teletextseiten ist.

## Claims

1. Receiver for receiving teletext signals with a device for storing a multiplicity of teletext pages in a teletext page memory (TSS) with teletext page request arrangements (AKQ 0...AKQ 7) with comparators for at least partially comparing, on a bit-by-bit basis, teletext address data (TD) with prescribable data (DA) and with a teletext page memory (TSS) for storing the multiplicity of teletext pages,
characterized in that
- the teletext page request arrangements (AKQ 0...AKQ 7) are connected in parallel,
- a control device (STE) for making available the prescribable data (DA) is provided, which control device (STE) is designed in such a way that each teletext page request arrangement (AKQ 0...AKQ 7) requests unambiguously at least some of the teletext pages of a magazine, writes these requested teletext pages of the magazine cyclically on a page-by-page basis into the page buffer memory (P0.0...P7.N) which is connected downstream of the corresponding teletext page request arrangement (AKQ 0...AKQ 7) and reads out a stored teletext page from a page buffer memory (P0.0...P7.N) into which teletext pages are not currently being written, and after determining the page number of the said teletext page the control device (STE) transmits the page to a memory address, provided for this page number of this magazine, in the teletext page memory (TSS) and stores it there.

2. Receiver according to Claim 1, characterized in that a page request memory (SFS) for storing a table of page numbers of teletext pages to be requested is provided, and in that the control device (STE) only permits transmission of a teletext page, stored in one of the page buffer memories (P0.0...P7.N), to the teletext page memory (TSS) if the teletext page stored in the page buffer memory (P0.0...P7.N) is identical with a page number contained in the table.

3. Receiver according to Claim 1 or 2, characterized in that each teletext page request arrangement (AKQ 0...AKQ 7) has target address registers in which a changeable address is stored, by means of which address a page buffer memory (P0.0...P7.N) connected downstream of the teletext page request arrangement (AKQ 0...AKQ 7) can be selected.

4. Receiver according to Claim 3, characterized in that the changeable address can be incremented cyclically by the control device (STE).

5. Receiver according to one of Claims 1 to 4, characterized in that the teletext page memory (TSS) is divided into segments (S) for storing a teletext page, in particular into segments (S) of 1 kbyte of memory space.

6. Receiver according to one of Claims 1 to 5, characterized in that a page buffer memory (P0.0...P7.N) has at least one segment (A) for storing one teletext page, in particular a segment (A) of 1 kbyte of memory space.

7. Receiver according to one of Claims 1 to 6, characterized in that a page buffer memory (P0.0...P7.N) has at least one further segment (B, C, D) for storing additional information.

8. Receiver according to one of Claims 1 to 7, characterized in that bit positions of the prescribable data (DA) can be occupied with "don't care" bits by the control device (STE), and in that the comparators are designed in such a way that a comparison result is independent of the bit positions occupied with the "don't care" bits and as a result only predetermined teletext pages of a magazine can be requested by the teletext page request arrangement (AKQ 0...AKQ 7).

9. Receiver according to one of Claims 1 to 8, characterized in that the teletext page memory (TSS) has a memory capacity of at least 100 kbyte.

10. Receiver according to one of Claims 1 to 9, characterized in that the control device (STE) only permits the teletext page stored in a page buffer memory (P0.0...P7.N) to be overwritten with a new teletext page after the previously stored teletext page has been transmitted to the teletext page memory (TSS).

11. Receiver according to one of Claims 1 to 10, characterized in that a teletext page requested by a user is searched for by the control device (STE) in the teletext page memory (TSS) and can be transmitted to a display memory (DIS) via a bus system (BUS) and can be represented on a screen (8) of the receiver by means of a character generator.

12. Receiver according to one of Claims 1 to 11, characterized in that the number of maximum possible page numbers in the table of the, or of a , page request memory (SFS) is smaller than or equal to the number of segments (S), provided in the teletext page memory (TSS), for the storage of the teletext pages.

## Revendications

1. Appareil récepteur de signaux de télétexte comportant un dispositif de mémorisation d'une pluralité de pages de télétexte dans une mémoire (TSS) de pages de télétexte, des dispositifs (AKQ 0...AKQ 7) de demande de pages de télétexte comportant des comparateurs destinés à comparer au moins une partie des bits de données (TD) d'adresses de télétexte à des données (DA) pouvant être prescrites et une mémoire (TSS) de pages de télétexte destinée à mémoriser la pluralité de pages de télétexte,
caractérisé en ce que
- les dispositifs (AKQ 0...AKQ 7) de demande de pages de télétexte sont branchés en parallèle,
- il est prévu un dispositif (STE) de commande, qui est destiné à tenir à disposition les données (DA) pouvant être prescrites et qui est formé de telle sorte que chaque dispositif (AKQ 0 ... AKQ 7) de demande de pages de télétexte demande de manière univoque au moins en partie les pages de télétexte d'un magazine, que ce dispositif de demande de pages de télétexte enregistre ces pages de télétexte demandées du magazine de manière cyclique, page par page, dans la mémoire intermédiaire (P0.0...P7.N) de pages branchée en aval du dispositif de demande de pages de télétexte correspondant et qu'il lise dans une mémoire (P0.0...P7.N) intermédiaire de pages, dans laquelle les pages de télétexte n'ont justement pas été enregistrées, une page de télétexte mémorisée et qu'il la transmette, après détermination des numéros de ces pages, à une adresse de mémoire prévue pour ces numéros de pages de ce magazine dans la mémoire (TSS) de pages de télétexte et l'y mémorise.

2. Appareil récepteur suivant la revendication 1,
caractérisé en ce que
une mémoire (SFS) de demande de pages qui est destinée à la mémorisation d'un tableau de numéros de pages de télétexte à demander est prévue, et le dispositif (STE) de commande n'admet une transmission d'une page de télétexte mémorisée dans l'une des mémoires (P0.0...P7.N) intermédiaires de pages à la mémoire (TSS) de pages de télétexte que si la page de télétexte mémorisée dans la mémoire intermédiaire (P0.0... P7.N) de pages est identique à un numéro de page contenu dans le tableau.

3. Appareil récepteur suivant la revendication 1 ou 2,
caractérisé en ce que
chaque dispositif (AKQ 0 ... AKQ 7) de demande de pages de télétexte comporte des registres d'adresses de destination, dans lesquels est mémorisée une adresse, qui peut être changée et par laquelle une mémoire intermédiaire (P0.0...P7.N) de pages branchée en aval du dispositif (AKQ 0 ... AKQ 7) de demande de pages de télétexte peut être sélectionnée.

4. Appareil récepteur suivant la revendication 3,
caractérisé en ce que
l'adresse qui peut être changée, peut être incrémentée de manière cyclique par le dispositif (STE) de commande.

5. Appareil récepteur suivant l'une des revendications 1 à 4,
caractérisé en ce que
la mémoire (TSS) de pages de télétexte est subdivisée en segments (S) destinés à la mémorisation d'une page de télétexte, notamment en segments (S) d'un kilo octet de place en mémoire.

6. Appareil récepteur suivant l'une des revendications 1 à 5,
caractérisé en ce que
une mémoire (P0.0 à P7.N) intermédiaire de pages comporte au moins un segment (A) destiné à la mémorisation d'une page de télétexte, notamment un segment (A) de 1 kilo octet de place en mémoire.

7. Appareil récepteur suivant l'une des revendications 1 à 6,
caractérisé en ce que
une mémoire (P0.0...P7.N) intermédiaire de pages comporte au moins un autre segment (B,C,D) destiné à la mémorisation d'informations supplémentaires.

8. Appareil récepteur suivant l'une des revendications 1 à 7,
caractérisé en ce que
des positions de bits des données (DA) pouvant être prescrites peuvent être occupées par des bits "don't care" par le dispositif (STE) de commande et les comparateurs sont tels que le résultat d'une comparaison est indépendant des positions des bits occupés par les bits "don't care" et qu'ainsi, seules des pages déterminées à l'avance de télétexte d'un magazine peuvent être demandées par le dispositif (AKQ 0 ... AKQ 7) de demande de pages de télétexte.

9. Appareil récepteur suivant l'une des revendications 1 à 8,
caractérisé en ce que
la mémoire (TSS) de pages de télétexte a une capacité de mémoire d'au moins 100 kilo octets.

10. Appareil récepteur suivant l'une des revendications 1 à 9,
caractérisé en ce que
le dispositif (STE) de commande n'admet une réécriture d'une nouvelle page de télétexte sur la page de télétexte mémorisée dans une mémoire (P0.0...P7.N) intermédiaire de pages qu'après que la page de télétexte mémorisée auparavant a été transmise à la mémoire (TSS) de pages de télétexte.

11. Appareil récepteur suivant l'une des revendications 1 à 10,
caractérisé en ce que
une page de télétexte demandée par un utilisateur est cherchée par le dispositif (STE) de commande dans la mémoire (TSS) de pages de télétexte et peut être transmise, par l'intermédiaire d'un système (BUS) de bus à une mémoire (DIS) d'écrans et peut être représentée, par l'intermédiaire d'un générateur de caractères, sur un écran (8) de l'appareil récepteur.

12. Appareil récepteur suivant l'une des revendications 1 à 11,
caractérisé en ce que
le nombre de numéros de pages maximum possible dans le tableau de la ou d'une mémoire (SFS) de demande de pages est inférieur ou égal au nombre des segments (S) prévus dans la mémoire (TSS) de pages de télétexte et destinée à la mémorisation des pages de télétexte.
